# EUROPEAN PATENT APPLICATION

(11) **EP 4 086 729 A1**
(43) Date of publication of application: **09.11.2022**
(21) Application number: 20909898.7
(22) Date of filing: 30.12.2020
(51) Int. Cl.: G06F 3/01, G11B 27/031

(54) **VIDEO EDITING METHOD AND HEAD-MOUNTED DEVICE**

(30) Priority: 31.12.2019 CN 201911424113
(71) Applicant: Vivo Mobile Communication Co., Ltd., Dongguan, Guangdong 523863 (CN)
(72) Inventor: YI, Ting, Dongguan, Guangdong 523863 (CN)
(74) Representative: Raffay & Fleck
(86) International application number: PCT/CN2020/141169
(87) International publication number: WO 2021/136329

(57) **Abstract**

Embodiments of the present invention provide a video editing method and a head-mounted device, being applied to the field of communications. The method comprises: displaying a video editing interface of a first video on a virtual screen in response to a first input that the head of a user drives the head-mounted device to move, the video editing interface comprising at least one editing control; adjusting the at least one editing control to a first position and a second position in the video editing interface in response to a second input that the head of the user drives the head-mounted device to move; and editing content between a first time point corresponding to the first position and a second time point corresponding to the second position in the first video into a second video, the first position and the second position being different positions of the same editing control in the video editing interface, or different positions of different editing controls in the video editing interface.

## Description

### CROSS-REFERENCE TO RELATED APPLICATIONS

This application claims priority to Chinese Patent Application No.201911424113.3, filed on December 31, 2019 in China, which is incorporated herein by reference in its entirety.

### TECHNICAL FIELD

Embodiments of this application relate to the field of communications technologies, and in particular, to a video trimming method and a head-mounted device.

### BACKGROUND

With the development of communications technologies, there are increasingly higher requirements of users on using electronic devices to do video editing, for example, video trimming. At present, an electronic device usually obtains a trimmed video by using a computer on which a specialized video trimming application is used for video post-editing. A user may trigger the electronic device to trim a video by using a trimming control in this specialized video trimming application first, and then trigger the electronic device to save the trimmed video by using a saving control in the video trimming application. However, the trimming control and the saving control may be put deep down in the video trimming application, for example, the trimming control and the saving control are in a multi-level menu in the video trimming application. Because of that, the user may need to trigger repeatedly to get to different levels of the multi-level menu to find and operate the trimming control and the saving control. In this way, a process of video trimming could be cumbersome.

### SUMMARY

Embodiments of the present invention provide a video trimming method and a head-mounted device, to resolve a problem that a process of video trimming by a head-mounted device is cumbersome.

To resolve the foregoing technical problem, the embodiments of the present invention are implemented as follows:
According to a first aspect, an embodiment of the present invention provides a video trimming method, applied to a head-mounted device, where the method includes: receiving a first input performed by a user, where the first input is an input of a motion of the head-mounted device when the user moves the head; displaying a video trimming interface for a first video in a virtual screen in response to the first input, where the video trimming interface includes at least one trimming control; receiving a second input performed by the user, where the second input is an input of a motion of the head-mounted device when the user moves the head; adjusting the at least one trimming control to a first position and a second position that are in the video trimming interface in response to the second input; and cutting out content between a first time point corresponding to the first position in the first video and a second time point corresponding to the second position in the first video to obtain a second video, where in a case in which the at least one trimming control is one trimming control, the first position and the second position are different positions of a same trimming control in the video trimming interface, or in a case in which the at least one trimming control includes two trimming controls, different positions of different trimming controls in the video trimming interface.

According to a second aspect, an embodiment of the present invention further provides a head-mounted device, where the head-mounted device includes a receiving module, a display module, an adjustment module, and a trimming module. The receiving module is configured to receive a first input performed by a user, where the first input is an input of a motion of the head-mounted device when the user moves the head; the display module is configured to display a video trimming interface for a first video in a virtual screen in response to the first input received by the receiving module, where the video trimming interface includes at least one trimming control; the receiving module is further configured to receive a second input performed by the user, where the second input is an input of a motion of the head-mounted device when the user moves the head; the adjustment module is configured to adjust the at least one trimming control to a first position and a second position that are in the video trimming interface in response to the second input received by the receiving module; and the trimming module is configured to cut out content between a first time point corresponding to the first position obtained by the adjustment module in the first video and a second time point corresponding to the second position obtained by the adjustment module in the first video to obtain a second video, where in a case in which the at least one trimming control is one trimming control, the first position and the second position are different positions of a same trimming control in the video trimming interface, or in a case in which the at least one trimming control includes two trimming controls, different positions of different trimming controls in the video trimming interface.

According to a third aspect, an embodiment of the present invention provides a head-mounted device, including a processor, a memory, and a computer program stored on the memory and capable of running on the processor, where when the computer program is executed by the processor, the steps of the video trimming method according to the first aspect are implemented.

According to a fourth aspect, an embodiment of the present invention provides a computer-readable storage medium, where the computer-readable storage medium stores a computer program, and when the computer program is executed by a processor, the steps of the video trimming method according to the first aspect are implemented.

In the embodiments of the present invention, the user may move the head to move the head-mounted device, to trigger the head-mounted device to display the video trimming interface for the first video, adjust the at least one trimming control to the first position and the second position that are in the video trimming interface, and then cut out the content between the first time point corresponding to the first position in the first video and the second time point corresponding to the second position in the first video to obtain the second video. In this way, when the user wears the head-mounted device, the user does not need to control an electronic device, for example, a mobile phone or a computer, first to trim a video (for example, the first video) and then control the head-mounted device to obtain a trimmed video (for example, the second video) from the electronic device, but can move the head-mounted device by moving head to trim the video. That is, video trimming can be implemented through natural interaction between the user's head and the head-mounted device. As a result, in a scenario in which the user uses the head-mounted device, the head-mounted device can trim a video quickly and conveniently.

### BRIEF DESCRIPTION OF DRAWINGS

FIG. 1 is a schematic diagram of an architecture of a possible operating system according to an embodiment of the present invention;
FIG. 2 is a schematic flowchart of a video trimming method according to an embodiment of the present invention;
FIG. 3 is a first schematic diagram of content displayed by a head-mounted device according to an embodiment of the present invention;
FIG. 4 is a second schematic diagram of content displayed by a head-mounted device according to an embodiment of the present invention;
FIG. 5 is a third schematic diagram of content displayed by a head-mounted device according to an embodiment of the present invention;
FIG. 6 is a fourth schematic diagram of content displayed by a head-mounted device according to an embodiment of the present invention;
FIG. 7 is a fifth schematic diagram of content displayed by a head-mounted device according to an embodiment of the present invention;
FIG. 8 is a sixth schematic diagram of content displayed by a head-mounted device according to an embodiment of the present invention;
FIG. 9 is a seventh schematic diagram of content displayed by a head-mounted device according to an embodiment of the present invention;
FIG. 10 is a schematic diagram of a structure of a possible head-mounted device according to an embodiment of the present invention; and
FIG. 11 is a schematic diagram of a hardware structure of a head-mounted device according to an embodiment of the present invention.

### DETAILED DESCRIPTION OF EMBODIMENTS

The following clearly and completely describes the technical solutions in embodiments of the present invention with reference to the accompanying drawings in the embodiments of the present invention. Apparently, the described embodiments are some rather than all of the embodiments of the present invention. All other embodiments acquired by a person of ordinary skill in the art based on the embodiments of the present invention without creative efforts shall fall within the protection scope of the present invention.

It should be noted that "/" in this specification represents "or". For example, A/B may indicate A or B; "and/or" in this specification merely describes an association relationship between associated objects, and indicates that there may be three relationships. For example, A and/or B may indicate three cases: only A exists, both A and B exist, and only B exists. The term "a plurality of" refers to two or more.

It should be noted that, in the embodiments of the present invention, words such as "exemplary" or "for example" are used to indicate an example, an instance, or descriptions. Any embodiment or design described as "exemplary" or "for example" in the embodiments of the present invention should not be construed as being more preferred or advantageous than other embodiments or design solutions. To be precise, the use of the term such as "exemplary" or "for example" is intended to present a related concept in a specific manner.

In the description and the claims of this application, the terms such as "first" and "second" are used to distinguish different objects, but are not used to describe a particular sequence of the objects. For example, a first input and a second input are used to distinguish between different inputs, instead of describing a specific order of inputs.

In the embodiments of the present invention, a head-mounted device may be considered a micro electronic device, for example, a mobile phone. Specifically, the head-mounted device may be augmented reality (Augmented Reality, AR) glasses, an AR helmet, or another AR device. The AR glasses or the AR helmet may overlay a virtual object on what a user directly sees through a transparent glass (for example, lenses), so that the user can see both the real world and a virtual world.

The head-mounted device has the following functions:
First, the head-mounted device has a function of tracking a line of sight of an eyeball. The head-mounted device may determine a status of the user (for example, a status of the user examining an object) based on the eyeball's line of sight, and perform a corresponding operation based on the status of the user. For example, the head-mounted device may track the eyeball's line of sight to determine where an eye of the user is looking, so that information about a road or information about a building at which the user is looking can be displayed on a virtual screen.

Second, the head-mounted device has a function of voice identification. A voice input of the user into the head-mounted device can replace typing and an operation instruction to control the head-mounted device to perform an operation indicated by the voice input. For example, in a scenario in which the user needs to make a call or send a text message, the user may conduct a voice input into the head-mounted device to control the head-mounted device to make a call or send a text message.

Third, the head-mounted device has a built-in motion sensor configured to detect the user's basic movements (such as turning or a translation) and health, for example, to detect a motion of the user's head. For example, the motion sensor may include an accelerometer and a gyroscope. That is, the head-mounted device may detect a turning direction and a turning angle that are of the head-mounted device or a translation direction and a translation distance that are of the head-mounted device by using the built-in motion sensor. That is, the head-mounted device can detect a turning direction and a turning angle that are of a user's head on which the head-mounted device is worn or a translation direction and a translation distance that are of the user's head on which the head-mounted device is worn.

Fourth, lenses of the head-mounted device in a vision of the user (such as lenses of AR glasses) are provided with a high-definition projector for real-time screen projection, so that the head-mounted device displays content, for example, displays content of a video or an operation interface of an application in the virtual screen (for example, a screen projection area of the high-definition projector). The virtual screen of the head-mounted device is usually of a large size, so that the user can perform actions such as watching videos or operating in an interface in a relatively large area.

It can be understood that in the embodiments of the present invention, when the electronic device in the foregoing embodiments is an AR device, the electronic device may be an electronic device integrated with the AR technology. The AR technology is a technology achieving a combination of a real-life environment and a virtual environment. The AR technology let people see real-life environments with overlaid information, so that people can experience both real-life environments and virtual environments at the same time by using the AR technology. Further, people can have better immersive experience.

An example in which an AR device is AR glasses is provided below. When a user wears the AR glasses, what the user sees is generated through processing by using the AR technology. To be specific, the AR technology can overlay a virtual environment on a real-life environment for a display. When the user operates content displayed by the AR glasses, the user can see that the AR glasses "open up" a real-life environment, to show the user the reality at a higher level. For example, when looking at a paper box with naked eyes, the user only sees an exterior of the paper box. But after the user wears the AR glasses, the user can see right through into an interior structure of the paper box through the AR glasses.

The AR device may include a camera, so that the AR device may display and have interaction in combination with virtual pictures on the basis of pictures captured by the camera. For example, in the embodiments of the present invention, in a case in which a video editing interface is displayed, the AR device may edit a video quickly and conveniently in response to an input of a motion of the AR device when the user moves the head.

In addition, the virtual screen in the embodiments of the present invention may be any display screen that can be used to display content projected by a projection device when the AR technology is used to display the content. The projection device may be a projection device using the AR technology, for example, the head-mounted device or AR device in the embodiments of the present invention, for example, AR glasses. When the AR technology is used to display content on the virtual screen, the projection device may project a virtual environment obtained (or integrated internally) by the projection device or a virtual environment and a real-life environment onto the virtual screen, so that the virtual screen can display the content, and an effect of the virtual environment overlaid on the real-life environment is shown to the user.

With reference to different scenarios of applying the AR technology, the virtual screen may usually be a display screen of an electronic device (for example, a mobile phone), lenses of AR glasses, a windshield of a car, a wall of a room, or any other possible display screens.

Examples in which the virtual screen is a display screen of an electronic device, lenses of AR glasses, or a windshield of a car are provided below to give an exemplary description of a process in which content is displayed on the virtual screen by using the AR technology.

In an example, when the virtual screen is a display screen of an electronic device, the projection device may be the electronic device. The electronic device may acquire, by using a camera of the electronic device, a real-life environment within an area in which the electronic device is located, and display the real-life environment on the display screen of the electronic device. Then, the electronic device may project a virtual environment obtained (or integrated internally) by the electronic device onto the display screen of the electronic device, so that the virtual environment can be overlaid on and displayed together with the real-life environment. Further, an effect of the virtual environment overlaid on the real-life environment can be shown on the display screen of the electronic device to the user.

In another example, when the virtual screen is lenses of AR glasses, the projection device may be the AR glasses. When the user wears the glasses, the user may see, through the lenses of the AR glasses, a real-life environment within an area in which the AR glasses are located, and the AR glasses may project a virtual environment obtained (or integrated internally) by the AR glasses onto the lenses of the AR glasses, so that an effect of the virtual environment overlaid on the real-life environment can be shown through the lenses of the AR glasses to the user.

In still another example, when the virtual screen is a windshield of a car, the projection device may any electronic device. When the user is in the car, the user may see, through the windshield of the car, a real-life environment within an area in which the car is located, and a projection device may project a virtual environment obtained (or integrated internally) by the projection device onto the windshield of the car, so that an effect of the virtual environment overlaid on the real-life environment can be shown through the windshield of the car to the user.

Clearly, in the embodiments of the present invention, a specific form of the virtual screen may not be limited. For example, the virtual screen may be a real-life space, which needs no particular display device. In this case, when the user is in the real-life space, the user may directly see a real-life environment in this real-life space, and a projection device may project a virtual environment obtained (or integrated internally) by the projection device into the real-life space, so that an effect of the virtual environment overlaid on the real-life environment can be shown in the real-life space to the user.

Specifically, in the video trimming method provided in the embodiments of the present invention, the user may move the head to move the head-mounted device, to trigger the head-mounted device to display the video trimming interface for the first video, adjust the at least one trimming control to the first position and the second position that are in the video trimming interface, and then cut out the content between the first time point corresponding to the first position in the first video and the second time point corresponding to the second position in the first video to obtain the second video. In this way, when the user wears the head-mounted device, the user does not need to control an electronic device, for example, a mobile phone or a computer, first to trim a video (for example, the first video) and then control the head-mounted device to obtain a trimmed video (for example, the second video) from the electronic device, but can move the head-mounted device by moving head to trim the video. That is, video trimming can be implemented through natural interaction between the user's head and the head-mounted device. As a result, in a scenario in which the user uses the head-mounted device, the head-mounted device can trim a video quickly and conveniently.

It should be noted that, in the video trimming method provided in the embodiments of the present invention, an execution body may be the head-mounted device, a central processing unit (Central Processing Unit, CPU) of the head-mounted device, or a control module configured to perform the video trimming method in the head-mounted device. In the embodiments of the present invention, an example in which the head-mounted device performs the video trimming method is used to describe the video trimming method provided in the embodiments of the present invention.

The head-mounted device in the embodiments of the present invention may be a head-mounted device having an operating system. The operating system may be an Android

(Android) operating system, an iOS operating system, or other possible operating systems, which is not specifically limited in the embodiments of the present invention.

The following uses a possible operating system as an example to describe a software environment to which the video trimming method provided in the embodiments of the present invention is applied.

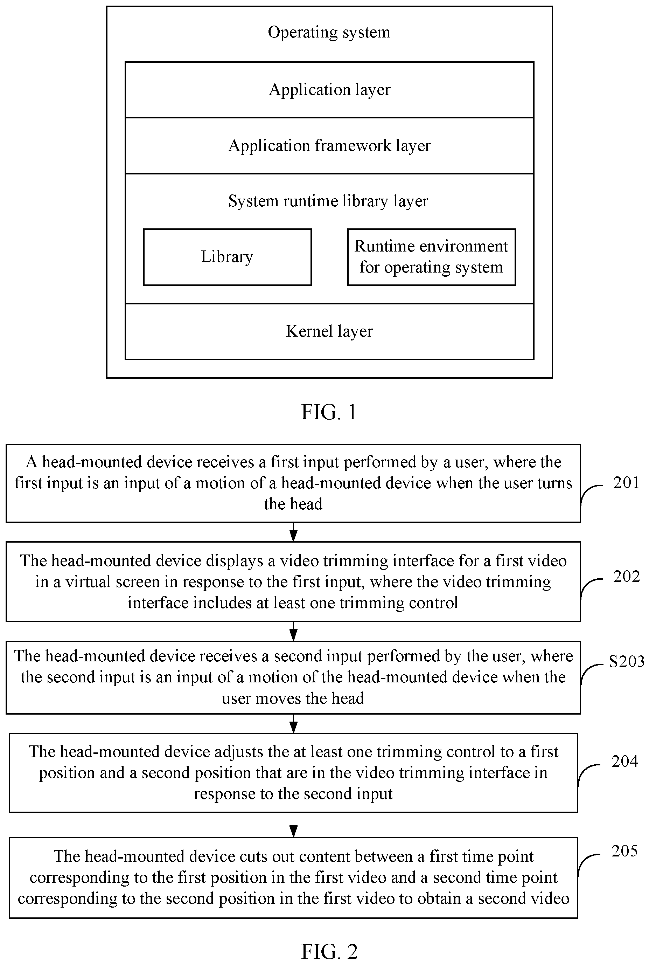

FIG. 1 is a schematic diagram of an architecture of a possible operating system according to an embodiment of the present invention. In FIG. 1, the architecture of the operating system includes 4 layers: an application layer, an application framework layer, a system runtime library layer, and a kernel layer (specifically, may be a Linux kernel layer).

The application layer includes various applications (including a system application and a third-party application) in the operating system.

The application framework layer is an application framework, and a developer may develop some applications based on the application framework layer following a rule of developing the application framework. For example, the applications include applications such as a system setting application, a system chat application, and a system camera application; or applications such as a third-party setting application, a third-party camera application, and a third-party chat application.

The system runtime library layer includes a library (also referred to as a system library) and an operating system running environment. The library mainly provides the operating system with various required resources. The operating system running environment is used to provide a software environment for the operating system.

The kernel layer is an operating system layer of the operating system, and is a bottom layer in operating system software layers. The kernel layer provides a core system service and a hardware-related driver for the operating system based on a Linux kernel.

The operating system is used as an example. In this embodiment of the present invention, based on the system architecture of the operating system shown in FIG. 1, developers can develop a software program that implements the video trimming method provided in the embodiments of the present invention, so that the video trimming method can be performed based on the operating system shown in FIG. 1. That is, by running the software program in the operating system, a processor or the head-mounted device can implement the video trimming method provided in the embodiments of the present invention.

The following describes in detail the video trimming method provided in the embodiments of the present invention with reference to a flowchart of a video trimming method illustrated in FIG. 2. Although a logical sequence of the video trimming method provided in the embodiments of the present invention is shown in the method flowchart, in some cases, the shown or described steps may be performed in a sequence different from the sequence herein. For example, the video trimming method illustrated in FIG. 2 may include step 201 to step 205.

Step 201: A head-mounted device receives a first input performed by a user, where the first input is an input of a motion of the head-mounted device when the user moves the head.

Optionally, the first input is received in a case in which the head-mounted device can display content of a video (for example, a first video) on a virtual screen.

The head-mounted device includes a spatial attitude capturing apparatus for detecting information about a spatial attitude of the device. When the spatial attitude capturing apparatus of the head-mounted device receives the first input of the motion of the head-mounted device when the user moves the head, that is, receives a head-turning operation or a moving operation of the user, the first input of the motion of the head-mounted device when the user moves the head is determined to be received based on the first input in a case in which an angular velocity, captured by the spatial attitude capturing apparatus, of a diversion on at least one of an X-axis, a Y-axis, and a Z-axis of the head-mounted device in a three-dimensional rectangular coordinate system satisfies a preset condition (for example, a change of the angular velocity of the diversion is greater than or equal to a preset angular velocity change threshold). The spatial attitude capturing apparatus may be a gyroscope, a gravity sensor, or another apparatus.

It can be understood that when the head-mounted device displays the content of the first video, the content of the first video is shown in a field of view of the user, so that the user can see the content of the first video.

In a case in which the video is paused, the head-mounted device may display content of the first video, to be specific, to display a video frame of the first video.

Optionally, the first input may be used to trigger the head-mounted device into a state of video trimming, for example, to trigger the head-mounted device to display a video trimming interface on the virtual screen.

Optionally, in this embodiment of the present invention, the first video may be a video recorded by the head-mounted device. In this case, the head-mounted device may display the content of the first video when the recording of the first video is ended.

It can be understood that the head-mounted device is worn on the user's head, and the head-mounted device moves as the user's head moves. That is, the head-mounted device is moved when the user moves the head. Specifically, the user may move the head with a turning motion or a moving motion to move the head-mounted device, that is, to turn the head-mounted device at a specific angle or move the head-mounted device for a specific distance.

For example, the first input may be an input of a turning motion of the head-mounted device when the user turns the head, or may be an input of a translation of the head-mounted device when the user moves the head.

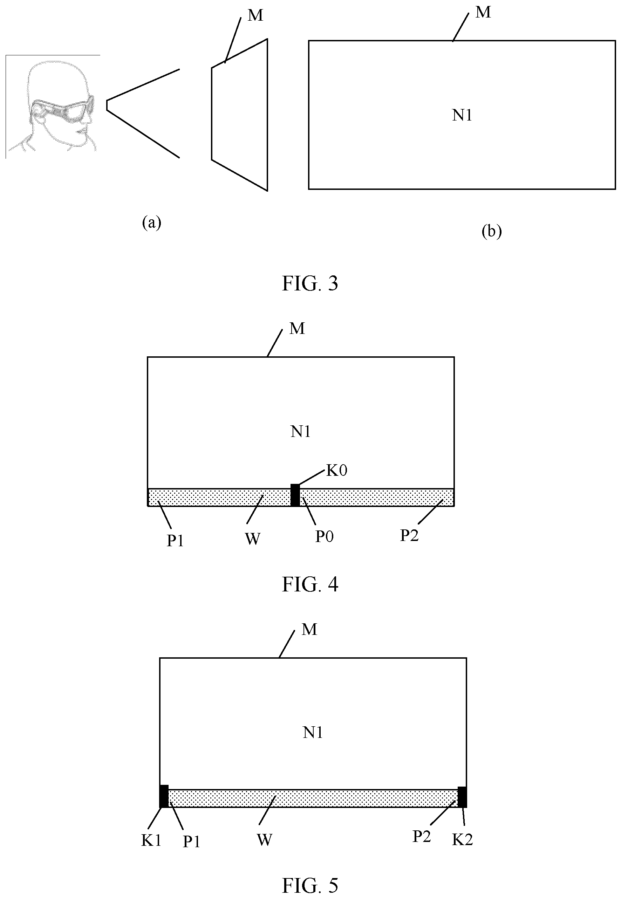

FIG. 3 is a schematic diagram of a user watching a video when wearing a head-mounted device according to an embodiment of the present invention. (a) in FIG. 3 shows an initial state of the user's head. To be specific, the user's head stays unmoved with no moving or turning. Moreover, (a) in FIG. 3 shows a relative position of a virtual screen M of the head-mounted device. To be specific, the virtual screen M is a visible area when the user wears the head-mounted device. (b) in FIG. 3 shows a plan of the virtual screen M. The virtual screen M can display content N1 of a video (for example, a first video).

Optionally, content on the virtual screen M may be seen by the user wearing the head-mounted device but not by other users.

It can be understood that the user may not move body parts below the neck, and moves the head by moving the neck.

Step 202: The head-mounted device displays a video trimming interface for a first video in a virtual screen in response to the first input, where the video trimming interface includes at least one trimming control.

Optionally, the at least one trimming control includes one trimming control or two trimming controls.

Optionally, in example 1 provided in this embodiment of the present invention in which the at least one trimming control is one trimming control, the trimming control corresponds to a middle time point in a length of the first video. In other words, the video trimming control is at a position in the video trimming interface which indicates the middle time point of the first video.

Optionally, in example 2 provided in this embodiment of the present invention in which the at least one trimming control is one trimming control, when the head-mounted device starts to display the video trimming interface for the first video, one of the two trimming controls corresponds to a starting time point in the length of the first video. In other words, the video trimming control is at a position in the video trimming interface which indicates the starting time point of the first video. The other of the two trimming controls corresponds to an ending time point in the length of the first video. In other words, the video trimming control is at a position in the video trimming interface which indicates the ending time point of the first video. In this case, content between the time points corresponding to the two trimming controls belong to the first video.

Step 203: The head-mounted device receives a second input performed by the user, where the second input is an input of a motion of the head-mounted device when the user moves the head.

The head-mounted device includes a spatial attitude capturing apparatus for detecting information about a spatial attitude of the device. When the spatial attitude capturing apparatus of the head-mounted device receives the second input of the motion of the head-mounted device when the user moves the head, that is, receives a head-turning operation or a moving operation of the user, the second input of the motion of the head-mounted device when the user moves the head is determined to be received based on the second input in a case in which an angular velocity, captured by the spatial attitude capturing apparatus, of a diversion on at least one of an x-axis, a y-axis, and a z-axis of the head-mounted device in a three-dimensional rectangular coordinate system satisfies a preset condition (for example, a change of the angular velocity of the diversion is greater than or equal to a preset angular velocity change threshold). The spatial attitude capturing apparatus may be a gyroscope, a gravity sensor, or another apparatus.

Optionally, the second input may be an input of a turning motion of the head-mounted device when the user turns the head, or may be an input of a movement of the head-mounted device when the user moves the head.

The second input may be used to trigger a trimming control in the at least one trimming control to move on the video trimming interface. To be specific, the user moves the head to move the trimming control on the video trimming interface, so that a position of the trimming control on the video trimming interface is changed.

Specifically, in a case in which one trimming control moves on the video trimming interface, there are different positions of the trimming control in the video trimming interface, and there are different time points of the trimming control corresponding to the first video.

Step 204: The head-mounted device adjusts the at least one trimming control to a first position and a second position that are in the video trimming interface in response to the second input.

Specifically, in a case in which the at least one trimming control includes two trimming controls, the head-mounted device adjusts one or all trimming control of the at least one trimming control.

It can be understood that after the head-mounted device adjusts the position of the at least one trimming control in the video trimming interface, content between time points in the first video corresponding to the at least one trimming control may have a change. To be specific, after the second input is finished, the content between the time points in the first video corresponding to the at least one trimming control is content between a first time point corresponding to the first position in the first video and a second time point corresponding to the second position in the first video.

Optionally, as one trimming control moves on the video trimming interface, the device may switch a currently displayed video frame to a video frame at a time point in the first video currently corresponding to the trimming control.

Step 205: The head-mounted device cuts out content between a first time point corresponding to the first position in the first video and a second time point corresponding to the second position in the first video to obtain a second video.

It can be understood that the content between the first time point and the second time point in the first video corresponding to the at least one trimming control is content obtained by the head-mounted device by trimming. Correspondingly, content not between the first time point and the second time point in the first video is content deleted by the head-mounted device.

Optionally, the head-mounted device may start performing step 205 after a specific time after an ending moment of performing step 204, and the user does not need to trigger to perform step 205. The specific time may be preset to, for example, 10 seconds.

It can be understood that because the head-mounted device may automatically determine the content between the first time point and the second time point in the first video corresponding to the at least one trimming control to be the second video after adjusting the position of the at least one trimming control in the video trimming interface, and the user does not need to perform a specific action to trigger the head-mounted device to trim the video, video trimming of the head-mounted device becomes more convenient.

It should be noted that, in the video trimming method provided in the embodiments of the present invention, the user may move the head to move the head-mounted device, to trigger the head-mounted device to display the video trimming interface for the first video, adjust the at least one trimming control to the first position and the second position that are in the video trimming interface, and then cut out the content between the first time point corresponding to the first position in the first video and the second time point corresponding to the second position in the first video to obtain the second video. In this way, when the user wears the head-mounted device, the user does not need to control an electronic device, for example, a mobile phone or a computer, first to trim a video (for example, the first video) and then control the head-mounted device to obtain a trimmed video (for example, the second video) from the electronic device, but can move the head-mounted device by moving head to trim the video. That is, video trimming can be implemented through natural interaction between the user's head and the head-mounted device. As a result, in a scenario in which the user uses the head-mounted device, the head-mounted device can trim a video quickly and conveniently.

Optionally, in the embodiments of the present invention, the video trimming interface further includes a progress bar control, the at least one trimming control is on the progress bar control, and the progress bar control corresponds to a length of the first video. Specifically, different positions on the progress bar control correspond to different time points in the length of the first video.

It can be understood that a starting position of the progress bar control may correspond to the starting time point of the first video, and an ending position of the progress bar control may correspond to the ending time point of the first video.

Specifically, in the foregoing embodiments, that the head-mounted device adjusts the at least one trimming control to a position in the video trimming interface means that the head-mounted device adjusts a position of the at least one trimming control on the progress bar control. That is, the first position and the second position are different positions on the progress bar control.

In example 1, when the head-mounted device starts to display the video trimming interface, the head-mounted device may display one trimming control (denoted as a trimming control K0) at a middle position P0 of the progress bar control. Specifically, the head-mounted device may move the trimming control K0 toward the starting position of the progress bar control first, and use a position on the progress bar control at which the trimming control K0 is nearest to the starting position as the first position; then, move the trimming control K0 toward the ending position of the progress bar control, and use a position on the progress bar control at which the trimming control K0 is nearest to the ending position as the second position.

In example 2, when the head-mounted device starts to display the video trimming interface, the head-mounted device may display one trimming control (denoted as a trimming control K1) at the starting position of the progress bar control, and display one trimming control (denoted as a trimming control K2) at the ending position of the progress bar control.

Specifically, in the foregoing embodiments, that the head-mounted device adjusts a trimming control in the two trimming controls to a position in the video trimming interface means that the head-mounted device adjusts positions of the two trimming controls on the progress bar control. Specifically, the head-mounted device may move the trimming control K1 toward the ending position of the progress bar control, and move the trimming control K2 toward the starting position of the progress bar control.

For example, the progress bar control may be below the video trimming interface.

In example 1, with reference to FIG. 3, FIG. 4 is a front view of the video trimming interface displayed by the head-mounted device. The virtual screen M shown in FIG. 4 includes the content N1 of the first video, a progress bar control W, and a trimming control K0. The trimming control K0 is at a middle position P0 of the progress bar control W. A shadow area in the progress bar control W represents content of a video obtained by the head-mounted device by trimming in real time. The first video is a video between a time point corresponding to a starting position P1 of the progress bar control W and a time point corresponding to an ending position P2 of the progress bar control.

Optionally, in this embodiment of the present invention, in a case in which the head-mounted device trims the first video to obtain the second video, the head-mounted device may move the trimming control K0 to a position close to the starting position of the progress bar control, and then move the trimming control K0 to a position close to the ending position of the progress bar control.

In example 2, with reference to FIG. 3, FIG. 5 is a front view of the video trimming interface displayed by the head-mounted device. The virtual screen M shown in FIG. 5 includes the content N1 of the first video, a progress bar control W, a trimming control K1, and a trimming control K2. The trimming control K1 is at a starting position P1 of the progress bar control W, and the trimming control K2 is at an ending position P2 of the progress bar control W. A shadowy area in the progress bar control W represents content of a video obtained by the head-mounted device by trimming.

Optionally, in this embodiment of the present invention, in a case in which the head-mounted device trims the first video to obtain the second video, the head-mounted device may move the trimming control K1 and the trimming control K2 on the progress bar control.

In this embodiment of the present invention, the head-mounted device may display the progress bar control, and the progress bar control corresponds to the length of the first video, so that the head-mounted device can display different time points in the length of the first video to the user directly. Therefore, the user can conveniently adjust a position of the at least one trimming control on the progress bar control subsequently.

Optionally, the first input is used to control the head-mounted device turn at a first angle along a first direction, and the first angle is greater than or equal to a first preset angle. For example, the first direction may be an upward direction of the user's head, and the first preset angle is 10 degrees. In other words, the first input may be an action of the user raising the head by more than 10 degrees.

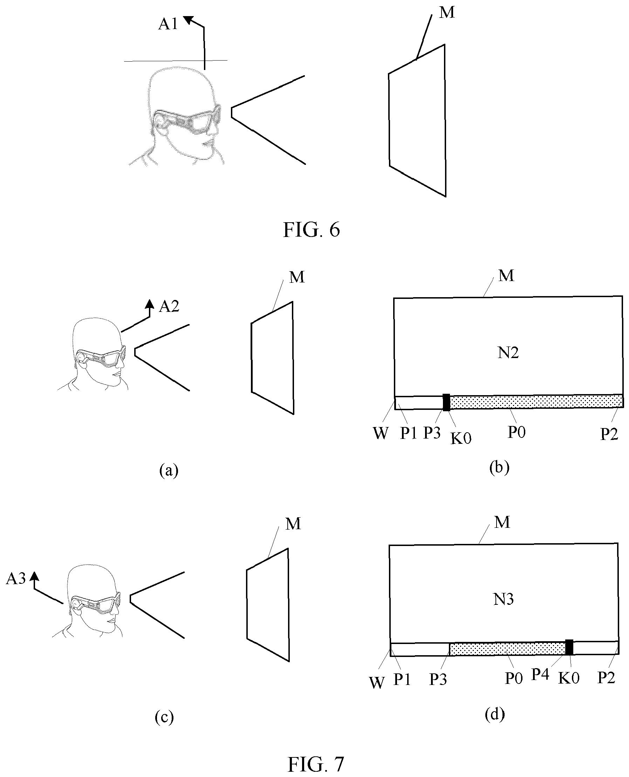

With reference to FIG. 3, as shown in FIG. 6, the user may move the head to turn the head-mounted device up (that is, at a direction A1) by more than 10 degrees, to trigger the head-mounted device to start to display the video trimming interface, for example, to display the video trimming interface shown in (b) in FIG. 3.

Because the user can implement an input by turning the head up to turn the head-mounted device up by a degree that reaches the first preset angle, that is, natural interaction between the user's head and the head-mounted device triggers the head-mounted device to display the video trimming interface, and the user does not need to operate with fingers to trigger the head-mounted device to display the video trimming interface, the user can trigger the head-mounted device to display the video trimming interface quickly and conveniently.

Optionally, in this embodiment of the present invention, the user may turn the head to turn the head-mounted device, to trigger the head-mounted device to adjust a position in the video trimming interface of at least one trimming control in the two trimming controls. For example, step 203 may be implemented by performing step 203a.

Step 203a: The head-mounted device adjusts the at least one trimming control to the first position and the second position that are in the video trimming interface based on a motion parameter of the user's head corresponding to the second input.

The motion parameter includes a turning direction and a turning angle, or includes a translation direction and a translation distance.

In this way, the user may not only move the head-mounted device by turning the head, to control to move the at least one trimming control in the video trimming interface, but may also move the head-mounted device by a translational motion of the head, to control to move the at least one trimming control in the video trimming interface. Therefore, the user can select a manner based on habits of use to control to move the at least one trimming control, which is favorable for improving man-machine interaction performance of the head-mounted device during video trimming.

Optionally, in this embodiment of the present invention, in a case in which the at least one trimming control includes one trimming control, and the motion parameter includes the turning direction, different moving directions of the trimming control are associated with different directions in the turning direction, and a moving distance of the trimming control is associated with the turning angle; or in a case in which the at least one trimming control includes two trimming controls, and the motion parameter includes the turning direction, moving directions of different trimming controls in the two trimming controls are associated with different directions in the turning direction, and a moving distance of each of the two trimming controls is associated with the turning angle.

For example, the second input includes a first input and a second sub-input. The first sub-input is an input of a motion of the head-mounted device with a third angle along a third direction when the user turns the head, and the second input is an input of a motion of the head-mounted device with a fourth angle along a fourth direction when the user turns the head. The third direction is different from the fourth direction.

Optionally, different angles at which the user turns the head along a same direction correspond to different time points in the length of the first video, that is, correspond to different positions of one trimming control in the progress bar control.

With reference to the foregoing embodiments, in example 1, a first moving direction of the trimming control K0 is associated with the third direction, and a second moving direction of the trimming control K0 is associated with the fourth direction. A first moving distance of the trimming control K0 along the first moving direction is associated with the third angle, and a second moving distance of the trimming control K0 along the second moving direction is associated with the fourth angle.

In example 1, the third direction may be a direction on the left of the user's head. To be specific, the first sub-input may be an action of turning the head-mounted device to the left by turning the user's head to the left. A value range of the third angle may be 0 degree to 90 degrees. Different angles in the third angle correspond to different time points in the length of the first video. Specifically, in a process in which the third angle changes from 0 degree to 90 degrees, the trimming control K0 moves from the middle position P0 of the progress bar control to the starting position P1 along the first moving direction (for example, a leftward moving direction). For example, when the third angle is 45 degrees, the trimming control K0 corresponds to a time point that is 1/4 of the length of the first video. In other words, a position of the first trimming control in the video trimming interface is 1/4 of the progress bar control. When the third angle is 90 degrees, the trimming control K0 corresponds to the starting time point in the length of the first video. In other words, a position of the trimming control K0 in the video trimming interface is the starting position P1 of the progress bar control.

Similarly, in example 1, the fourth direction may be a direction on the right of the user's head. To be specific, the second sub-input may be an action of turning the head-mounted device to the right by turning the user's head to the right. A value range of the fourth angle may be 0 degree to 90 degrees. Different angles in the fourth angle ranging from 0 degree to 90 degrees correspond to different time points in the length of the first video. Specifically, in a process in which the fourth angle changes from 0 degree to 90 degrees, the trimming control K0 moves from the middle position P0 of the progress bar control to the ending position P2 along the second moving direction (for example, a rightward moving direction). For example, when the fourth angle is 45 degrees, the trimming control K0 corresponds to a time point that is 1/4 of the length of the first video. In other words, a position of the trimming control K0 in the video trimming interface is 1/4 of the progress bar control. When the fourth angle is 90 degrees, the trimming control K0 corresponds to the ending time point in the length of the first video. In other words, a position of the trimming control K0 in the video trimming interface is the ending position P2 of the progress bar control.

For example, with reference to FIG. 4 to FIG. 6, as shown in (a) in FIG. 7, after the first sub-input of a motion of the head-mounted device along a leftward direction (that is, a direction A2) by a degree of θ1 when the user turns the head, as shown in (b) in FIG. 7, the head-mounted device moves the trimming control K0 to a position P3 on the progress bar control W in the video trimming interface, and video content in the video trimming interface is updated to video content N2 at a time point corresponding to the position P3 in the length of the first video.

Then, as shown in (c) in FIG. 7, after the second sub-input of a motion of the head-mounted device along a rightward direction (that is, a direction A3) by a degree of θ2 when the user turns the head, as shown in (d) in FIG. 7, the head-mounted device moves the trimming control K0 to a position P4 on the progress bar control W in the video trimming interface. In addition, video content in the video trimming interface is updated to video content N3 at a time point corresponding to the position P4 in the length of the first video. In this case, the second input includes the first sub-input and the second sub-input.

Correspondingly, the head-mounted device may determine content between time points corresponding to the position P3 and the position P4 in the first video to be the second video. In this case, the first position is the position P3, and the second position is the position P4. Correspondingly, the first time point is a time point corresponding to the position P3, and the second time point is a time point corresponding to the position P4.

With reference to the foregoing embodiments, in example 2, a third moving direction of the trimming control K2 is associated with the third direction, and a fourth moving direction of the trimming control K1 is associated with the fourth direction. A third moving distance of the trimming control K2 along the third moving direction is associated with the third angle, and a fourth moving distance of the trimming control K1 along the fourth moving direction is associated with the fourth angle.

In example 2, the third direction may be a direction on the left of the user's head. To be specific, the first sub-input may be an action of turning the head-mounted device to the left by turning the user's head to the left. A value range of the third angle may be 0 degree to 90 degrees. Different angles in the third angle correspond to different time points in the length of the first video. Specifically, in a process in which the third angle changes from 0 degree to 90 degrees, the trimming control K2 moves from the ending position P2 of the progress bar control to the starting position P1 along the third moving direction (for example, a leftward moving direction). For example, when the third angle is 45 degrees, the trimming control K2 corresponds to a time point that is in the halfway of the length of the first video. In other words, a position of the first trimming control in the video trimming interface is in the middle of the progress bar control. When the third angle is 90 degrees, the trimming control K2 corresponds to the starting time point in the length of the first video. In other words, a position of the trimming control K2 in the video trimming interface is the starting position P1 of the progress bar control.

Similarly, in example 2, the fourth direction may be a direction on the right of the user's head. To be specific, the second sub-input may be an action of turning the head-mounted device to the right by turning the user's head to the right. A value range of the fourth angle may be 0 degree to 90 degrees. Different angles in the fourth angle ranging from 0 degree to 90 degrees correspond to different time points in the length of the first video. Specifically, in a process in which the fourth angle changes from 0 degree to 90 degrees, the trimming control K1 moves from the starting position P1 of the progress bar control to the ending position P2 along the fourth moving direction (for example, a rightward moving direction). For example, when the fourth angle is 45 degrees, the trimming control K1 corresponds to a time point that is in the halfway of the length of the first video. In other words, a position of the trimming control K1 in the video trimming interface is the middle position P0 of the progress bar control. When the fourth angle is 90 degrees, the trimming control K1 corresponds to the ending time point in the length of the first video. In other words, a position of the trimming control K1 in the video trimming interface is the ending position P2 of the progress bar control.

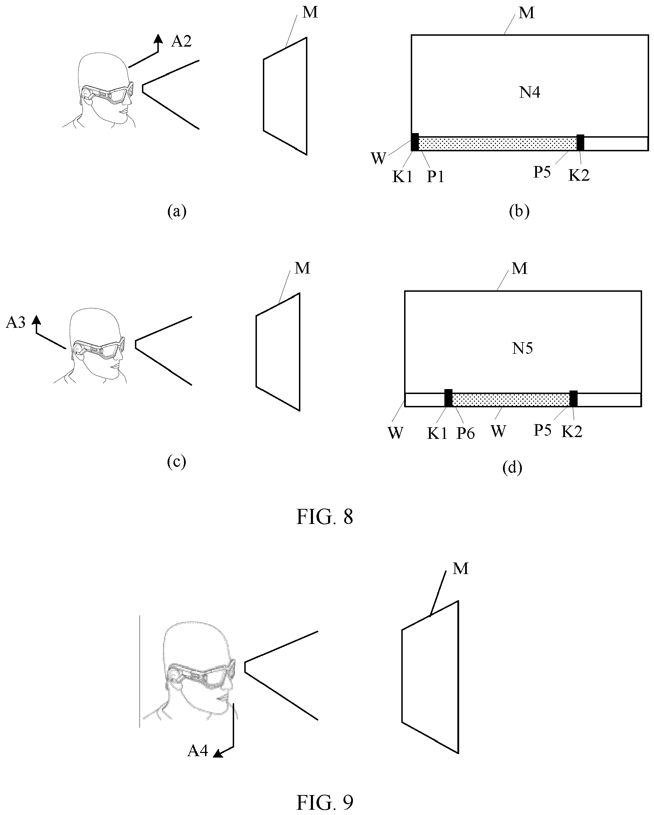

For example, with reference to FIG. 5 to FIG. 6, as shown in (a) in FIG. 8, after the first sub-input of a motion of the head-mounted device along a leftward direction (that is, a direction A2) by a degree of θ3 when the user turns the head, as shown in (b) in FIG. 8, the head-mounted device moves the trimming control K2 to a position P5 on the progress bar control W in the video trimming interface, and video content in the video trimming interface is updated to video content N4 at a time point corresponding to the position P5 in the length of the first video.

Then, as shown in (c) in FIG. 8, after the second sub-input of a motion of the head-mounted device along a rightward direction (that is, a direction A3) by a degree of θ4 when the user turns the head, as shown in (d) in FIG. 8, the head-mounted device moves the trimming control K1 to a position P6 on the progress bar control W in the video trimming interface. In addition, video content in the video trimming interface is updated to video content N5 at a time point corresponding to the position P6 in the length of the first video. In this case, the second input includes the first sub-input and the second sub-input.

Correspondingly, the head-mounted device may determine content between time points corresponding to the position P6 and the position P5 in the first video to be the second video. In this case, the first position is the position P6, and the second position is the position P5. Correspondingly, the first time point is a time point corresponding to the position P6, and the second time point is a time point corresponding to the position P5.

In this embodiment of the present invention, because the user can implement an input by turning the head to turn the head-mounted device, that is, natural interaction between the user's head and the head-mounted device triggers the head-mounted device to adjust the position of the at least one trimming control in the video trimming interface, and the user does not need to operate with fingers to trigger the head-mounted device to adjust the position of the at least one trimming control in the video trimming interface, the user can trigger the head-mounted device to adjust the position of the at least one trimming control in the video trimming interface quickly and conveniently.

Optionally, in this embodiment of the present invention, the user may move the head with a translational motion to move the head-mounted device, to trigger the head-mounted device to adjust the position of the at least one trimming control in the video trimming interface.

Optionally, in this embodiment of the present invention, in a case in which the at least one trimming control includes one trimming control, and the motion parameter includes the translation direction, different moving directions of the trimming control are associated with different directions in the translation direction, and a moving distance of the trimming control is associated with the translation distance; or in a case in which the at least one trimming control includes two trimming controls, and the motion parameter includes the translation direction, moving directions of different trimming controls in the two trimming controls are associated with different directions in the translation direction.

With reference to the foregoing embodiments, the second input includes a third sub-input of a translational motion of the head-mounted device for a first distance along a fifth direction when the user moves the head and a fourth sub-input of a translational motion of the head-mounted device for a second distance along a sixth direction when the user moves the head. The fifth direction is different from the sixth direction.

Optionally, different distances for which the user moves the head with the translational motion along a direction correspond to different time points in the length of the first video, that is, correspond to different positions of one trimming control in the progress bar control.

For example, in example 1, a first moving direction of the trimming control K0 is associated with the fifth direction, and a second moving direction of the trimming control K0 is associated with the sixth direction. A first moving distance of the trimming control K0 along the first moving direction is associated with the first distance, and a second moving distance of the trimming control K0 along the second moving direction is associated with the second distance.

In example 1, the fifth direction is a direction on the left of the user's head. To be specific, the first sub-input may be an action of moving the head-mounted device to the left (that is, moving along the first moving direction) by moving the user's head to the left. A value range of the first distance may be 0 centimeter to 10 centimeters. Different distances in the first distance correspond to different time points in the length of the first video. Specifically, in a process in which the first distance changes from 0 centimeter to 10 centimeters, the trimming control K0 moves from the middle position P0 of the progress bar control to the starting position P1 along the first moving direction. For example, when the first distance is 5 centimeters, the trimming control K0 corresponds to a time point that is 1/4 of the length of the first video. In other words, a position of the first trimming control in the video trimming interface is 1/4 of the progress bar control. When the first distance is 10 centimeters, the trimming control K0 corresponds to the starting time point in the length of the first video. In other words, a position of the trimming control K0 in the video trimming interface is the starting position P1 of the progress bar control.

For example, the sixth direction may be a direction on the right of the user's head. To be specific, the second sub-input may be an action of moving the head-mounted device to the right (that is, moving along the second moving direction) by moving the user's head to the right. A value range of the second distance may be 0 centimeter to 10 centimeters. Different distances in the second distance correspond to different time points in the length of the first video. Specifically, in a process in which the second distance changes from 0 centimeter to 10 centimeters, the trimming control K0 moves from the middle position P0 of the progress bar control to the ending position P2 along the second moving direction. For example, when the second distance is 5 centimeters, the trimming control K0 corresponds to a time point that is 1/4 of the length of the first video. In other words, a position of the second trimming control in the video trimming interface is 1/4 of the progress bar control. When the second distance is 10 centimeters, the trimming control K0 corresponds to the ending time point in the length of the first video. In other words, a position of the trimming control K0 in the video trimming interface is the ending position P2 of the progress bar control.

Similarly, for a process in which the user moves the head to move the head-mounted device, to trigger the head-mounted device to adjust the position of the at least one trimming control in the video trimming interface, refer to related descriptions in FIG. 7. Details are not described herein again in this embodiment of the present invention.

With reference to the foregoing embodiments, in example 2, the third moving direction of the trimming control K2 is associated with the fifth direction, and the fourth moving direction of the trimming control K1 is associated with the sixth direction. A third moving distance of the trimming control K2 along the third moving direction is associated with the first distance, and a fourth moving distance of the trimming control K1 along the fourth moving direction is associated with the second distance.

In example 1, the fifth direction is a direction on the left of the user's head. To be specific, the first sub-input may be an action of moving the head-mounted device to the left (that is, moving along the third moving direction) by moving the user's head to the left. A value range of the first distance may be 0 centimeter to 10 centimeters. Different distances in the first distance correspond to different time points in the length of the first video. Specifically, in a process in which the first distance changes from 0 centimeter to 10 centimeters, the trimming control K2 moves from the middle position P0 of the progress bar control to the starting position P1 along the third moving direction. For example, when the first distance is 5 centimeters, the trimming control K2 corresponds to a time point that is in the halfway of the length of the first video. In other words, a position of the first trimming control in the video trimming interface is the middle position P0 of the progress bar control. When the first distance is 10 centimeters, the trimming control K2 corresponds to the starting time point in the length of the first video. In other words, a position of the trimming control K2 in the video trimming interface is the starting position P1 of the progress bar control.

For example, the sixth direction may be a direction on the right of the user's head. To be specific, the second sub-input may be an action of moving the head-mounted device to the right (that is, moving along the fourth moving direction) by moving the user's head to the right. A value range of the second distance may be 0 centimeter to 10 centimeters. Different distances in the second distance correspond to different time points in the length of the first video. Specifically, in a process in which the second distance changes from 0 centimeter to 10 centimeters, the trimming control K1 moves from the starting position P1 of the progress bar control to the ending position P2 along the fourth moving direction. For example, when the second distance is 5 centimeters, the trimming control K1 corresponds to a time point that is in the halfway of the length of the first video. In other words, a position of the second trimming control in the video trimming interface is the middle position P0 of the progress bar control. When the second distance is 10 centimeters, the trimming control K1 corresponds to the ending time point in the length of the first video. In other words, a position of the trimming control K1 in the video trimming interface is the ending position P2 of the progress bar control.

Similarly, for a process in which the user moves the head to move the head-mounted device, to trigger the head-mounted device to adjust the position of the at least one trimming control in the video trimming interface, refer to related descriptions in FIG. 8. Details are not described herein again in this embodiment of the present invention.

In this embodiment of the present invention, because the user can implement an input by moving the head to move the head-mounted device, that is, natural interaction between the user's head and the head-mounted device triggers the head-mounted device to adjust the position of the at least one trimming control in the video trimming interface, and the user does not need to operate with fingers to trigger the head-mounted device to adjust the position of the at least one trimming control in the video trimming interface, the user can trigger the head-mounted device to adjust the position of the at least one trimming control in the video trimming interface quickly and conveniently.

In this embodiment of the present invention, the head-mounted device may be triggered by the user to start to trim a video, so that the head-mounted device can start to trim the video quickly and precisely. Optionally, before step 205, the video trimming method provided in the embodiments of the present invention may further include step 206, and accordingly, step 205 may be implemented by performing step 205a.

Step 206: The head-mounted device receives a third input performed by the user, where the third input is an input of a motion of the head-mounted device when the user moves the head.

The head-mounted device includes a spatial attitude capturing apparatus for detecting information about a spatial attitude of the device. When the spatial attitude capturing apparatus of the head-mounted device receives the third input of the motion of the head-mounted device when the user moves the head, that is, receives a head-turning operation or a translation operation of the user, the third input of the motion of the head-mounted device when the user moves the head is determined to be received based on the third input in a case in which an angular velocity, captured by the spatial attitude capturing apparatus, of a diversion on at least one of an x-axis, a y-axis, and a z-axis of the head-mounted device in a three-dimensional rectangular coordinate system satisfies a preset condition (for example, a change of the angular velocity of the diversion is greater than or equal to a preset angular velocity change threshold). The spatial attitude capturing apparatus may be a gyroscope, a gravity sensor, or another apparatus.

For example, the third input may be an input of a turning motion of the head-mounted device when the user turns the head, or may be an input of a translation of the head-mounted device when the user moves the head.

Optionally, the third input is an input of a motion of the head-mounted device at a second angle along a second direction when the user turns the head, and the second angle is greater than or equal to a second preset angle. For example, the second direction may be a downward direction of the user's head, and the second preset angle is 10 degrees. In other words, the third input may be an action of the user lowering the head by more than 10 degrees.

With reference to FIG. 3 and FIG. 8, as shown in FIG. 9, the user may move the head to turn the head-mounted device down (that is, at a direction A4) by more than 10 degrees, to trigger the head-mounted device to start to trim and then save a video. For example, the head-mounted device may cut out content between time points corresponding to a position P6 and a position P5 that are in the first video shown in (d) in FIG. 8 and save the content as content of the second video.

Because the user can implement an input by turning the head down (that is, at the second direction) to turn the head-mounted device down by a degree that reaches the second preset angle, that is, natural interaction between the user's head and the head-mounted device triggers the head-mounted device to start to trim and then save a video, and the user does not need to operate with fingers to trigger the head-mounted device to start to trim and then save a video, the user can start to trim and then save a video quickly and conveniently.

Step 205a: The head-mounted device cuts out the content between the first time point and the second time point in the first video to obtain the second video in response to the third input, and saves the second video.

Specifically, the head-mounted device cuts out the content between the first time point and the second time point in the first video and save the content as the second video, and deletes content not between the first time point and the second time point in the first video.

In this embodiment of the present invention, because the head-mounted device may be triggered by the user to start to trim a video, it can be avoided that the user triggers the head-mounted device to start to trim the video by mistakes when the user is triggering the head-mounted device to adjust the position of the at least one trimming control in the video trimming interface. In this way, precision and controllability of video trimming by the head-mounted device is ensured.

In the embodiments of the present invention, it usually does not take long for the user to trigger the head-mounted device to adjust the position of the at least one trimming control in the video trimming interface. If it takes a long time in this process, it may indicate that the user has not performed the action of triggering to adjust the position of the at least one trimming control in the video trimming interface for long. Specifically, in the embodiments of the present invention, step 203 may be implemented by performing step 203c.

Step 203c: The head-mounted device receives, in a preset period of time, the second input of the motion of the head-mounted device when the user moves the head.

It can be understood that, the preset period of time may represent valid duration in which the user moves the head to move the head-mounted device effectively, to control the head-mounted device to adjust the position of the at least one trimming control in the video trimming interface.

Specifically, the head-mounted device may detect, in the preset period of time, an action of the user's head in real time, to adjust the position of the at least one trimming control in the video trimming interface. After an end of the preset time, the head-mounted device no longer adjusts the position of the at least one trimming control in the video trimming interface.

In this embodiment of the present invention, because the second input of the motion of the head-mounted device when the user moves the head is received by the head-mounted device in the preset period of time, that is, the position of the at least one trimming control in the video trimming interface is adjusted in the preset period of time, and a step for adjusting the position of the at least one trimming control in the video trimming interface is not continuously performed, it is favorable for avoiding an unnecessary step performed by the head-mounted device to determine how to adjust the position of the at least one trimming control in the video trimming interface and avoiding a waste of resources for the head-mounted device.

Optionally, in the embodiments of the present invention, step 204 may be implemented by performing step 204b.

Step 204b: In a case in which a length between the first time point and the second time point is less than a preset length, the head-mounted device readjusts the at least one trimming control to a third position and a fourth position that are in the video trimming interface.

The preset length is a length between a third time point corresponding to the third position in the first video and a fourth time point corresponding to the fourth position in the first video.

For example, the preset length is one second.

In this case, no matter how the head-mounted device adjusts the position of the at least one trimming control in the video trimming interface, a length of the second video obtained by the head-mounted device by trimming is greater than or equal to the preset length. In other words, the length between the two time points corresponding to the at least one trimming control is greater than or equal to the preset length, to ensure that the two time points corresponding to the at least one trimming control can indicate content of a valid video.

For example, in a case in which the user triggers the head-mounted device to control to move one trimming control from the starting position of the progress bar control to the ending position of the progress bar control, the content of the second video obtained by the head-mounted device by trimming is content that is before the ending time point of the first video and that is within the preset length. On the contrary, in a case in which the user triggers the head-mounted device to control to move one trimming control from the ending position of the progress bar control to the starting position of the progress bar control, the length of the second video obtained by the head-mounted device by trimming is content that is after the starting time point of the first video and that is within the preset length.

In this embodiment of the present invention, because the head-mounted device can control over the length of the second video to be greater than or equal to the preset length, it can be avoided that no video content is obtained by the head-mounted device after trimming due to an invalid movement of the at least one trimming control (for example, the two trimming controls completely overlay each other), thereby facilitating successful video trimming by the head-mounted device.

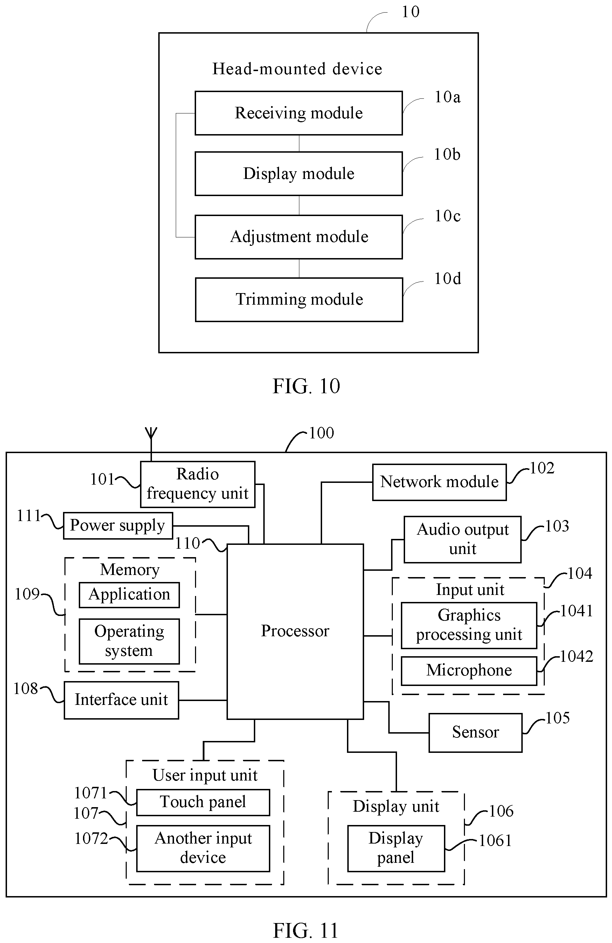

FIG. 10 is a schematic diagram of a structure of a possible head-mounted device according to an embodiment of the present invention. The head-mounted device 10 shown in FIG. 10 includes a receiving module 10a, a display module 10b, an adjustment module 10c, and a trimming module 10d. The receiving module 10a is configured to receive a first input performed by a user, where the first input is an input of a motion of the head-mounted device when the user moves the head; the display module 10b is configured to display a video trimming interface for a first video in a virtual screen in response to the first input received by the receiving module 10a, where the video trimming interface includes at least one trimming control; the receiving module 10a is further configured to receive a second input performed by the user, where the second input is an input of a motion of the head-mounted device when the user moves the head; the adjustment module 10c is configured to adjust the at least one trimming control to a first position and a second position that are in the video trimming interface in response to the second input received by the receiving module 10a; and the trimming module 10d is configured to cut out content between a first time point corresponding to the first position obtained by the adjustment module 10c in the first video and a second time point corresponding to the second position obtained by the adjustment module 10c in the first video to obtain a second video, where in a case in which the at least one trimming control is one trimming control, the first position and the second position are different positions of a same trimming control in the video trimming interface, or in a case in which the at least one trimming control includes two trimming controls, different positions of different trimming controls in the video trimming interface.

In the head-mounted device provided in the embodiments of the present invention, the user may move the head to move the head-mounted device, to trigger the head-mounted device to display the video trimming interface for the first video, adjust the at least one trimming control to the first position and the second position that are in the video trimming interface, and then cut out the content between the first time point corresponding to the first position in the first video and the second time point corresponding to the second position in the first video to obtain the second video. In this way, when the user wears the head-mounted device, the user does not need to control an electronic device, for example, a mobile phone or a computer, first to trim a video (for example, the first video) and then control the head-mounted device to obtain a trimmed video (for example, the second video) from the electronic device, but can move the head-mounted device by moving head to trim the video. That is, video trimming can be implemented through natural interaction between the user's head and the head-mounted device. As a result, in a scenario in which the user uses the head-mounted device, the head-mounted device can trim a video quickly and conveniently.

Optionally, the receiving module 10a is further configured to: before the trimming module 10d cuts out the content between the first time point corresponding to the first position in the first video and the second time point corresponding to the second position in the first video to obtain the second video, receive a third input performed by the user, where the third input is an input of a motion of the head-mounted device when the user moves the head; and the trimming module 10d is specifically configured to: cut out the content between the first time point and the second time point in the first video to obtain the second video in response to the third input received by the receiving module 10a, and save the second video.

Because the head-mounted device may be triggered by the user to start to trim a video, it can be avoided that the user triggers the head-mounted device to start to trim the video by mistakes when the user is triggering the head-mounted device to adjust the position of the at least one trimming control in the video trimming interface. In this way, precision and controllability of video trimming by the head-mounted device is ensured.

Optionally, the video trimming interface further includes a progress bar control, the at least one trimming control is on the progress bar control, and the progress bar control corresponds to a length of the first video. The adjustment module 10c is specifically configured to adjust the at least one trimming control to the first position and the second position that are on the progress bar control.

The head-mounted device may display the progress bar control, and the progress bar control corresponds to the length of the first video, so that the head-mounted device can display different time points in the length of the first video to the user directly. Therefore, the user can conveniently adjust a position of the at least one trimming control on the progress bar control subsequently.

Optionally, the first input is an input of a motion of the head-mounted device at a first angle along a first direction when the user turns the head, and the first angle is greater than or equal to a first preset angle.

Because the user can implement an input by turning the head up to turn the head-mounted device up by a degree that reaches the first preset angle, that is, natural interaction between the user's head and the head-mounted device triggers the head-mounted device to display the video trimming interface, and the user does not need to operate with fingers to trigger the head-mounted device to display the video trimming interface, the user can trigger the head-mounted device to display the video trimming interface quickly and conveniently.

Optionally, the third input is an input of a motion of the head-mounted device at a second angle along a second direction when the user turns the head, and the second angle is greater than or equal to a second preset angle.

Because the user can implement an input by turning the head down to turn the head-mounted device down (that is, at the second direction) by a degree that reaches the second preset angle, that is, natural interaction between the user's head and the head-mounted device triggers the head-mounted device to start to trim and then save a video, and the user does not need to operate with fingers to trigger the head-mounted device to start to trim and then save a video, the user can start to trim and then save a video quickly and conveniently.

Optionally, the adjustment module 10c is specifically configured to adjust the at least one trimming control to the first position and the second position that are in the video trimming interface based on a motion parameter of the user's head corresponding to the second input, where the motion parameter includes a turning direction and a turning angle, or includes a translation direction and a translation distance.

The user may not only move the head-mounted device by turning the head, to control to move the at least one trimming control in the video trimming interface, but may also move the head-mounted device by a translational motion of the head, to control to move the at least one trimming control in the video trimming interface. Therefore, the user can select a manner based on habits of use to control to move the at least one trimming control, which is favorable for improving man-machine interaction performance of the head-mounted device during video trimming.

Optionally, in a case in which the at least one trimming control includes one trimming control, and the motion parameter includes the turning direction, different moving directions of the trimming control are associated with different directions in the turning direction, and a moving distance of the trimming control is associated with the turning angle; or in a case in which the at least one trimming control includes two trimming controls, and the motion parameter includes the turning direction, moving directions of different trimming controls in the two trimming controls are associated with different directions in the turning direction, and a moving distance of each of the two trimming controls is associated with the turning angle.

Because the user can implement an input by turning the head to turn the head-mounted device, that is, natural interaction between the user's head and the head-mounted device triggers the head-mounted device to adjust the position of the at least one trimming control in the video trimming interface, and the user does not need to operate with fingers to trigger the head-mounted device to adjust the position of the at least one trimming control in the video trimming interface, the user can trigger the head-mounted device to adjust the position of the at least one trimming control in the video trimming interface quickly and conveniently.

Optionally, in a case in which the at least one trimming control includes one trimming control, and the motion parameter includes the translation direction, different moving directions of the trimming control are associated with different directions in the translation direction, and a moving distance of the trimming control is associated with the translation distance; or in a case in which the at least one trimming control includes two trimming controls, and the motion parameter includes the translation direction, moving directions of different trimming controls in the two trimming controls are associated with different directions in the translation direction, and a moving distance of each of the two trimming controls is associated with the translation distance.

Because the user can implement an input by moving the head to move the head-mounted device, that is, natural interaction between the user's head and the head-mounted device triggers the head-mounted device to adjust the position of the at least one trimming control in the video trimming interface, and the user does not need to operate with fingers to trigger the head-mounted device to adjust the position of the at least one trimming control in the video trimming interface, the user can trigger the head-mounted device to adjust the position of the at least one trimming control in the video trimming interface quickly and conveniently.

Optionally, the adjustment module 10c is further configured to: after adjusting the at least one trimming control to the first position and the second position that are in the video trimming interface, in a case in which a length between the first time point and the second time point is less than a preset length, readjust the at least one trimming control to a third position and a fourth position that are in the video trimming interface, where the preset length is a length between a third time point corresponding to the third position in the first video and a fourth time point corresponding to the fourth position in the first video.

In this embodiment of the present invention, because the head-mounted device can control over the length of the second video to be greater than or equal to the preset length, it can be avoided that no video content is obtained by the head-mounted device after trimming due to an invalid movement of the at least one trimming control (for example, the two trimming controls completely overlay each other), thereby facilitating successful video trimming by the head-mounted device.

The head-mounted device 100 provided in this embodiment of the present invention can implement the processes implemented by the head-mounted device in the foregoing method embodiment. To avoid repetition, details are not described herein again.

FIG. 11 is a schematic diagram of a hardware structure of a head-mounted device according to an embodiment of the present invention. The terminal device 100 includes, but is not limited to, components such as a radio frequency unit 101, a network module 102, an audio output unit 103, an input unit 104, a sensor 105, a display unit 106, a user input unit 107, an interface unit 108, a memory 109, a processor 110, and a power supply 111. It can be understood by a person skilled in the art that, the structure of the head-mounted device shown in FIG. 11 does not constitute any limitation on the head-mounted device, and the head-mounted device may include more or fewer components than those shown in the figure, or combine some components, or have different component arrangements. In this embodiment of the present invention, the head-mounted device includes, but is not limited to, AR glasses, an AR helmet, and the like.

The processor 110 is configured to: control the sensor 105 to receive a first input performed by a user, where the first input is an input of a motion of the head-mounted device when the user moves the head; control the display unit 106 to display a video trimming interface for a first video in a virtual screen in response to the first input received by the sensor 105, where the video trimming interface includes at least one trimming control; further configured to control the sensor 105 to receive a second input performed by the user, where the second input is an input of a motion of the head-mounted device when the user moves the head; configured to adjust the at least one trimming control to a first position and a second position that are in the video trimming interface in response to the second input received by the sensor 105; and configured to cut out content between a first time point corresponding to the first position in the first video and a second time point corresponding to the second position in the first video to obtain a second video, where in a case in which the at least one trimming control is one trimming control, the first position and the second position are different positions of a same trimming control in the video trimming interface, or in a case in which the at least one trimming control includes two trimming controls, different positions of different trimming controls in the video trimming interface.

In the head-mounted device provided in this embodiment of the present invention, the user may move the head to move the head-mounted device, to trigger the head-mounted device to display the video trimming interface for the first video, adjust the at least one trimming control to the first position and the second position that are in the video trimming interface, and then cut out the content between the first time point corresponding to the first position in the first video and the second time point corresponding to the second position in the first video to obtain the second video. In this way, when the user wears the head-mounted device, the user does not need to control an electronic device, for example, a mobile phone or a computer, first to trim a video (for example, the first video) and then control the head-mounted device to obtain a trimmed video (for example, the second video) from the electronic device, but can move the head-mounted device by moving head to trim the video. That is, video trimming can be implemented through natural interaction between the user's head and the head-mounted device. As a result, in a scenario in which the user uses the head-mounted device, the head-mounted device can trim a video quickly and conveniently.

It should be understood that, in this embodiment of the present invention, the radio frequency unit 101 may be configured to receive and transmit signals during information receiving and transmitting or a call. Specifically, the radio frequency unit receives downlink data from a base station, and transmits the downlink data to the processor 110 for processing; and transmits uplink data to the base station. Generally, the radio frequency unit 101 includes, but is not limited to, an antenna, at least one amplifier, a transceiver, a coupler, a low noise amplifier, and a duplexer. In addition, the radio frequency unit 101 may also communicate with a network and other devices through a wireless communications system.

The head-mounted device provides users with wireless broadband Internet access through the network module 102, for example, helps users receive and send e-mails, browse web pages, and access streaming media.

The audio output unit 103 may convert audio data received by the radio frequency unit 101 or the network module 102 or stored in the memory 109 into an audio signal, and output the audio signal as sound. In addition, the audio output unit 103 may further provide an audio output (for example, a call signal receiving sound and a message receiving sound) related to a specific function performed by the head-mounted device 100. The audio output unit 103 includes a speaker, a buzzer, a telephone receiver, and the like.

The input unit 104 is configured to receive audio or video signals. The input unit 104 may include a graphics processing unit (Graphics Processing Unit, GPU) 1041 and a microphone 1042. The graphics processing unit 1041 is configured to process image data of a static picture or a video obtained by an image capture device (for example, a camera) in a video capture mode or an image capture mode. A processed image frame may be displayed on the display unit 106. The image frame processed by the graphics processing unit 1041 may be stored in the memory 109 (or another storage medium) or sent by using the radio frequency unit 101 or the network module 102. The microphone 1042 may receive a sound and can process such a sound into audio data. The processed audio data may be converted, in a phone calling mode, into a format that may be transmitted to a mobile communication base station by using the radio frequency unit 101 for output.

The head-mounted device 100 further includes at least one sensor 105, for example, a light sensor, a motion sensor, and another sensor. Specifically, the light sensor includes an ambient light sensor and a proximity sensor. The ambient light sensor may adjust brightness of a display panel 1061 according to ambient light brightness. The proximity sensor may switch off the display panel 1061 and/or backlight when the head-mounted device 100 moves close to an ear. As a motion sensor, an accelerometer sensor may detect magnitude of accelerations in various directions (usually three axes), may detect magnitude and the direction of gravity when stationary, may be configured to identify postures of the head-mounted device (such as switching between a landscape mode and a portrait mode, related games, and magnetometer posture calibration), may perform functions related to vibration identification (such as a pedometer and a knock), and the like. The sensor 105 may further include a fingerprint sensor, a pressure sensor, an iris sensor, a molecular sensor, a gyroscope, a barometer, a hygrometer, a thermometer, an infrared sensor, or the like. Details are not described herein again.

The display unit 106 is configured to display information entered by the user or information provided for the user. The display unit 106 may include a display panel 1061, and the display panel 1061 may be configured in a form of a liquid crystal display (Liquid Crystal Display, LCD), an organic light-emitting diode (Organic Light-Emitting Diode, OLED), or the like.

The user input unit 107 may be configured to receive entered number or character information, and generate key signal input related to user settings and function control of the head-mounted device. Specifically, the user input unit 107 includes a touch panel 1071 and other input devices 1072. The touch panel 1071, also called a touch screen, may collect touch operation on or near the touch panel by users (for example, operation on the touch panel 1071 or near the touch panel 1071 by fingers or any suitable objects or accessories such as a touch pen by the users). The touch panel 1071 may include two parts: a touch detection apparatus and a touch controller. The touch detection apparatus detects a touch position of a user, detects a signal brought by a touch operation, and transmits the signal to the touch controller. The touch controller receives touch information from the touch detection apparatus, converts the touch information into contact coordinates, sends the contact coordinates to the processor 110, and receives and executes a command from the processor 110. In addition, the touch panel 1071 may be implemented in a plurality of forms, such as a resistive type, a capacitive type, an infrared ray type, and a surface acoustic wave type. In addition to the touch panel 1071, the user input unit 107 may further include other input devices 1072. Specifically, the other input devices 1072 may include but are not limited to: a physical keyboard, a function key (such as a volume control key, a switch key), a trackball, a mouse, and a joystick, which is no longer repeated here.

Further, the touch panel 1071 may cover the display panel 1061. When detecting a touch operation on or near the touch panel 1071, the touch panel transmits the touch operation to the processor 110 to determine a type of a touch event. Then the processor 110 provides corresponding visual output on the display panel 1061 based on the type of the touch event. Although in FIG. 11, the touch panel 1071 and the display panel 1061 are configured as two independent components to implement input and output functions of the head-mounted device, in some embodiments, the touch panel 1071 and the display panel 1061 can be integrated to implement the input and output functions of the head-mounted device. This is not specifically limited herein.

The interface unit 108 is an interface for connecting an external apparatus and the head-mounted device 100. For example, the external apparatus may include a wired or wireless headset jack, an external power supply (or a battery charger) port, a wired or wireless data port, a storage card port, a port for connecting an apparatus having an identification module, an audio input/output (I/O) port, a video I/O port, a headset jack, or the like. The interface unit 108 may be configured to receive an input (for example, data information or power) from an external apparatus and transmit the received input to one or more elements in the head-mounted device 100, or may be configured to transmit data between the head-mounted device 100 and the external apparatus.

The memory 109 may be configured to store a software program and various data. The memory 109 may mainly include a program storage area and a data storage area. The program storage area may store an operating system, an application required by at least one function (for example, a sound play function or an image display function), and the like. The data storage area may store data (for example, audio data or an address book) or the like created based on use of the mobile phone. In addition, the memory 109 may include a high-speed random access memory or a nonvolatile memory, for example, at least one disk storage device, a flash memory, or other volatile solid-state storage devices.

The processor 110 is a control center of the head-mounted device and connects all parts of the head-mounted device using various interfaces and circuits. By running or executing software programs and/or modules stored in the memory 109 and by calling data stored in the memory 109, the processor 110 implements various functions of the head-mounted device and processes data, thus performing overall monitoring on the head-mounted device. The processor 110 may include one or more processing units. Preferably, the processor 110 may be integrated with an application processor and a modem processor. The application processor mainly processes the operating system, the user interface, applications, and the like. The modem processor mainly processes wireless communication. It may be understood that the above-mentioned modem processor may not be integrated in the processor 110.

The head-mounted device 100 may further include the power supply 111 (for example, a battery) configured to supply power to various components. Preferably, the power supply 111 may be logically connected to the processor 110 through a power management system, so as to implement functions such as managing charging, discharging, and power consumption through the power management system.

In addition, the head-mounted device 100 includes some functional modules not shown. Details are not described herein again.

Preferably, an embodiment of the present invention further provides a head-mounted device, including a processor 110, a memory 109, and a computer program that is stored in the memory 109 and that can run on the processor 110. When the computer program is executed by the processor 110, the processes of the foregoing method embodiment are implemented and a same technical effect can be achieved. To avoid repetition, details are not described herein again.

Optionally, in the embodiments of the present invention, the head-mounted device in the foregoing embodiments may be an AR device. Specifically, when the head-mounted device in the foregoing embodiments is an AR device, the AR device may include some or all functional modules in the foregoing head-mounted device. Clearly, the AR device may further include a functional module not included in the foregoing head-mounted device.

It can be understood that in the embodiments of the present invention, when the head-mounted device in the foregoing embodiments is an AR device, the head-mounted device may be a head-mounted device integrated with the AR technology. The AR technology is a technology achieving a combination of a real-life environment and a virtual environment. The AR technology let people see real-life environments with overlaid information, so that people can experience both real-life environments and virtual environments at the same time by using the AR technology. Further, people can have better immersive experience.

An embodiment of the present invention further provides a computer-readable storage medium. The computer-readable storage medium stores a computer program, and when the computer program is executed by a processor, the processes in the foregoing method embodiments are implemented; and same technical effects can be achieved. To avoid repetition, details are not described herein again. The computer-readable storage medium is a read-only memory (Read-Only Memory, ROM), a random access memory (Random Access Memory, RAM), a magnetic disk, an optical disc, or the like.

It should be noted that in this specification, the terms "comprise", "include" and any other variants thereof are intended to cover non-exclusive inclusion, so that a process, a method, an article, or a device that includes a series of elements not only includes these very elements, but may also include other elements not expressly listed, or also include elements inherent to this process, method, article, or apparatus. An element limited by "includes a..." does not, without more constraints, preclude the presence of additional identical elements in the process, method, article, or apparatus that includes the element.

Based on the foregoing descriptions of the embodiments, a person skilled in the art may clearly understand that the method in the foregoing embodiment may be implemented by software in addition to a necessary universal hardware platform or by hardware only. In most circumstances, the former is a preferred implementation manner. Based on such understanding, the above technical solutions of this application substantially, or the part(s) thereof making contributions to the prior art, can be embodied in the form of a software product. Said computer software product can be stored in a computer-readable storage medium (such as a ROM/RAM, a magnetic disk, or an optical disk) that comprises several instructions to enable a head-mounted device (which may be a mobile phone, a computer, or the like) to perform the method described in the embodiments of this application.

The embodiments of this application are described above with reference to the accompanying drawings, but this application is not limited to the above specific implementations, and the above specific implementations are only illustrative and not restrictive. Under the enlightenment of this application, those of ordinary skill in the art can make many forms without departing from the purpose of this application and the protection scope of the claims, all of which fall within the protection of this application.

## Claims

1. A video trimming method, applied to a head-mounted device, wherein the method comprises:
receiving a first input performed by a user, wherein the first input is an input of a motion of the head-mounted device when the user moves the head;
displaying a video trimming interface for a first video in a virtual screen in response to the first input, wherein the video trimming interface comprises at least one trimming control;
receiving a second input performed by the user, wherein the second input is an input of a motion of the head-mounted device when the user moves the head;
adjusting the at least one trimming control to a first position and a second position that are in the video trimming interface in response to the second input; and
cutting out content between a first time point corresponding to the first position in the first video and a second time point corresponding to the second position in the first video to obtain a second video, wherein
in a case in which the at least one trimming control is one trimming control, the first position and the second position are different positions of the same trimming control in the video trimming interface; or in a case in which the at least one trimming control comprises two trimming controls, the first position and the second position are different positions of different trimming controls in the video trimming interface.

2. The method according to claim 1, wherein before the cutting out content between a first time point corresponding to the first position in the first video and a second time point corresponding to the second position in the first video to obtain a second video, the method further comprises:
receiving a third input performed by the user, wherein the third input is an input of a motion of the head-mounted device when the user moves the head; and
the cutting out content between a first time point corresponding to the first position in the first video and a second time point corresponding to the second position in the first video to obtain a second video comprises:
cutting out the content between the first time point and the second time point in the first video to obtain the second video in response to the third input, and saving the second video.

3. The method according to claim 1, wherein the video trimming interface further comprises a progress bar control, the at least one trimming control is on the progress bar control, and the progress bar control corresponds to a length of the first video; and
the adjusting the at least one trimming control to a first position and a second position that are in the video trimming interface comprises:
adjusting the at least one trimming control to the first position and the second position that are on the progress bar control.

4. The method according to claim 1, wherein the first input is an input of a motion of the head-mounted device at a first angle along a first direction when the user turns the head, and the first angle is greater than or equal to a first preset angle.

5. The method according to claim 2, wherein the third input is an input of a motion of the head-mounted device at a second angle along a second direction when the user turns the head, and the second angle is greater than or equal to a second preset angle.

6. The method according to any one of claims 1 to 5, wherein the adjusting the at least one trimming control to a first position and a second position that are in the video trimming interface comprises:
adjusting the at least one trimming control to the first position and the second position that are in the video trimming interface based on a motion parameter of the user's head corresponding to the second input, wherein
the motion parameter comprises a turning direction and a turning angle, or comprises a translation direction and a translation distance.

7. The method according to claim 6, wherein in a case in which the at least one trimming control comprises one trimming control and the motion parameter comprises the turning direction, different moving directions of the trimming control are associated with different directions in the turning direction, and a moving distance of the trimming control is associated with the turning angle; or
in a case in which the at least one trimming control comprises two trimming controls and the motion parameter comprises the turning direction, moving directions of different trimming controls in the two trimming controls are associated with different directions in the turning direction, and a moving distance of each of the two trimming controls is associated with the turning angle.

8. The method according to claim 6, wherein in a case in which the at least one trimming control comprises one trimming control and the motion parameter comprises the translation direction, different moving directions of the trimming control are associated with different directions in the translation direction, and a moving distance of the trimming control is associated with the translation distance; or
in a case in which the at least one trimming control comprises two trimming controls and the motion parameter comprises the translation direction, moving directions of different trimming controls in the two trimming controls are associated with different directions in the translation direction, and a moving distance of each of the two trimming controls is associated with the translation distance.

9. The method according to claim 1, wherein after the adjusting the at least one trimming control to a first position and a second position that are in the video trimming interface, the method comprises:
in a case in which a length between the first time point and the second time point is less than a preset length, readjusting the at least one trimming control to a third position and a fourth position that are in the video trimming interface, wherein
the preset length is a length between a third time point corresponding to the third position in the first video and a fourth time point corresponding to the fourth position in the first video.

10. A head-mounted device, wherein the head-mounted device comprises a receiving module, a display module, an adjustment module, and a trimming module, wherein
the receiving module is configured to receive a first input performed by a user, wherein the first input is an input of a motion of the head-mounted device when the user moves the head;
the display module is configured to display a video trimming interface for a first video in a virtual screen in response to the first input received by the receiving module, wherein the video trimming interface comprises at least one trimming control;
the receiving module is further configured to receive a second input performed by the user, wherein the second input is an input of a motion of the head-mounted device when the user moves the head;
the adjustment module is configured to adjust the at least one trimming control to a first position and a second position that are in the video trimming interface in response to the second input received by the receiving module; and
the trimming module is configured to cut out content between a first time point corresponding to the first position obtained by the adjustment module in the first video and a second time point corresponding to the second position obtained by the adjustment module in the first video to obtain a second video, wherein
in a case in which the at least one trimming control is one trimming control, the first position and the second position are different positions of the same trimming control in the video trimming interface; or in a case in which the at least one trimming control comprises two trimming controls, the first position and the second position are different positions of different trimming controls in the video trimming interface.

11. The head-mounted device according to claim 10, wherein
the receiving module is further configured to: before the trimming module cuts out the content between the first time point corresponding to the first position in the first video and the second time point corresponding to the second position in the first video to obtain the second video, receive a third input performed by the user, wherein the third input is an input of a motion of the head-mounted device when the user moves the head; and
the trimming module is specifically configured to: cut out the content between the first time point and the second time point in the first video to obtain the second video in response to the third input received by the receiving module, and save the second video.

12. The head-mounted device according to claim 10, wherein the video trimming interface further comprises a progress bar control, the at least one trimming control is on the progress bar control, and the progress bar control corresponds to a length of the first video; and
the adjustment module is specifically configured to adjust the at least one trimming control to the first position and the second position that are on the progress bar control.

13. The head-mounted device according to claim 10, wherein the first input is an input of a motion of the head-mounted device at a first angle along a first direction when the user turns the head, and the first angle is greater than or equal to a first preset angle.

14. The head-mounted device according to claim 11, wherein the third input is an input of a motion of the head-mounted device at a second angle along a second direction when the user turns the head, and the second angle is greater than or equal to a second preset angle.

15. The head-mounted device according to any one of claims 10 to 14, wherein
the adjustment module is specifically configured to adjust the at least one trimming control to the first position and the second position that are in the video trimming interface based on a motion parameter of the user's head corresponding to the second input, wherein
the motion parameter comprises a turning direction and a turning angle, or comprises a translation direction and a translation distance.

16. The head-mounted device according to claim 15, wherein in a case in which the at least one trimming control comprises one trimming control and the motion parameter comprises the turning direction, different moving directions of the trimming control are associated with different directions in the turning direction, and a moving distance of the trimming control is associated with the turning angle; or
in a case in which the at least one trimming control comprises two trimming controls and the motion parameter comprises the turning direction, moving directions of different trimming controls in the two trimming controls are associated with different directions in the turning direction, and a moving distance of each of the two trimming controls is associated with the turning angle.

17. The head-mounted device according to claim 15, wherein in a case in which the at least one trimming control comprises one trimming control and the motion parameter comprises the translation direction, different moving directions of the trimming control are associated with different directions in the translation direction, and a moving distance of the trimming control is associated with the translation distance; or
in a case in which the at least one trimming control comprises two trimming controls and the motion parameter comprises the translation direction, moving directions of different trimming controls in the two trimming controls are associated with different directions in the translation direction, and a moving distance of each of the two trimming controls is associated with the translation distance.

18. The head-mounted device according to claim 10, wherein the adjustment module is further configured to: after adjusting the at least one trimming control to the first position and the second position that are in the video trimming interface, in a case in which a length between the first time point and the second time point is less than a preset length, readjust the at least one trimming control to a third position and a fourth position that are in the video trimming interface, wherein
the preset length is a length between a third time point corresponding to the third position in the first video and a fourth time point corresponding to the fourth position in the first video.

19. A head-mounted device, comprising a processor, a memory, and a computer program stored on the memory and capable of running on the processor, wherein when the computer program is executed by the processor, the steps of the video trimming method according to any one of claims 1 to 9 are implemented.

20. A computer-readable storage medium, wherein the computer-readable storage medium stores a computer program, and when the computer program is executed by a processor, the steps of the video trimming method according to any one of claims 1 to 9 are implemented.
